# EUROPÄISCHE PATENTSCHRIFT

(11) **EP 0 704 109 B1**
(45) Veröffentlichungstag und Bekanntmachung des Hinweises auf die Patenterteilung: **15.01.1997**
(21) Anmeldenummer: 94916872.8
(22) Anmeldetag: 01.06.1994
(51) Int. Cl.: H01M 8/24, H01M 8/04

(54) **HOCHTEMPERATURBRENNSTOFFZELLENANLAGE**
HIGH-TEMPERATURE FUEL CELL INSTALLATION
INSTALLATION DE PILES A COMBUSTIBLE A HAUTE TEMPERATURE

(30) Priorität: 14.06.1993 DE 4319411
(43) Veröffentlichungstag der Anmeldung: 03.04.1996
(73) Patentinhaber: SIEMENS AKTIENGESELLSCHAFT, 80333 München (DE)
(72) Erfinder: SCHABERT, Hans-Peter, D-91058 Erlangen (DE); DRENCKHAHN, Wolfgang, D-91058 Erlangen (DE); VOLLMAR, Horst, D-91074 Herzogenaurach (DE)
(86) Internationale Anmeldenummer: DE9400618
(87) Internationale Veröffentlichungsnummer: WO9429922

(56) Entgegenhaltungen:
- EP-A- 0 338 823
- EP-A- 0 398 111
- DE-A- 3 918 115
- PATENT ABSTRACTS OF JAPAN vol. 10, no. 91 (E-394) (2148) 9. April 1986 & JP,A,60 235 365 (FUJI DENKI SOUGOU KENKYUSHO K.K.) 22. November 1985
- PATENT ABSTRACTS OF JAPAN vol. 16, no. 255 (E-1214) 10. Juni 1992 & JP,A,04 056 075 (MITSUBISHI HEAVY IND LTD) 24. Februar 1992
- PATENT ABSTRACTS OF JAPAN vol. 17, no. 334 (E-1387) 24. Juni 1993 & JP,A,05 041 239 (NKK CORP) 19. Februar 1993
- PATENT ABSTRACTS OF JAPAN vol. 11, no. 110 (E-496) (2557) 7. April 1987 & JP,A,61 259 461 (HITACHI LTD) 17. November 1986
- EXTENDED ABSTRACTS, Bd.93, Nr.1, 16. Mai 1993, PRINCETON, NEW JERSEY US Seiten 1580 - 1581 M. SHIMOTSU ET AL 'Current Status of Mitsui in SOFC Field'
- PATENT ABSTRACTS OF JAPAN vol. 17, no. 223 (E-1359) 7. Mai 1993 & JP,A,04 357 673 (FUJI ELECTRIC CO LTD) 10. Dezember 1992

## Beschreibung

Die Erfindung bezieht sich auf eine Hochtemperaturbrennstoffzellenanlage mit einem Behälter und mit mindestens einem in dem Behälter angeordneten Hochtemperaturbrennstoffzellen-stapel.

Ein Brennstoffzellenstapel umfaßt mehrere elektrisch in Serie geschaltete, plane, fest aufeinanderliegende Festelektrolyt-Hochtemperatur-Brennstoffzellen. Hierbei ist zwischen unmittelbar benachbarten Zellen je eine bipolare Platte eingebaut, die die Kathode der einen Zelle mit der Anode der dieser benachbarten Zelle elektrisch leitend verbindet, die Gasverteilung sicherstellt und ein tragendes Strukturelement darstellt.

In der Brennstoffzelle läuft ein Prozeß ab, der im wesentlichen eine Umkehrung der Elektrolyse darstellt. Die Reaktionspartner der Verbrennungsreaktion, der Brennstoff, im allgemeinen Wasserstoff, und der Sauerstoffträger, im allgemeinen Luft, werden getrennt zugeführt. In einer Hochtemperaturbrennstoffzelle sind die Brennstoff- und Sauerstoff-führenden Zuleitungen durch einen keramischen Festelektrolyten, der auf beiden Seiten mit Elektroden versehen ist, voneinander gasdicht getrennt. Im Betrieb werden an der brennstoffseitigen Elektrode, der Anode, des Festelektrolyten Elektronen abgegeben und an der sauerstoffseitigen Elektrode, der Kathode, des Festelektrolyten Elektronen aufgenommen. An den beiden Elektroden des Festelektrolyten stellt sich eine Potentialdifferenz, die Leerlaufspannung, ein. Der Festelektrolyt hat die Funktion, die Reaktanten zu trennen, die Ladungen in Form von Ionen zu überführen und zugleich einen Elektronenkurzschluß zwischen den beiden Elektroden des Festelektrolyten zu verhindern. Hierzu muß er eine niedrige Leitfähigkeit für Elektronen und zugleich eine hohe Leitfähigkeit für Ionen aufweisen.

Solche Hochtemperaturbrennstoffzellen eignen sich infolge der relativ hohen Betriebstemperatur - sie liegt im Bereich von 800° bis 1100° C - im Gegensatz zu Niedertemperaturbrennstoffzellen dazu, außer Wasserstoffgas auch Kohlenwasserstoffe, wie z. B. Erdgas oder flüssig speicherbares Propan, umzusetzen. Mit Hochtemperaturbrennstoffzellen sind hohe Leistungsdichten erreichbar, die größenordnungsmäßig im Bereich von mehreren 100 mW pro cm² zellfläche liegen. Die einzelne Hochtemperaturbrennstoffzelle erzeugt eine Leerlaufspannung von etwas über einem Volt. Weitere Einzelheiten zu Hochtemperaturbrennstoffzellen sind in dem "Fuel Cell Handbook" von Appleby and Foulkes, New York, 1989, zu entnehmen.

In welcher Weise Hochtemperaturbrennstoffzellen beispielsweise in Kraft-Wärme- Kopplungs-Anlagen verwendet sein können, ist auch dem Aufsatz "Technische und wirtschaftliche Aspekte des Brennstoffzellen-Einsatzes in Kraft-Wärme-Kopplungs-Anlagen" von Drenckhahn, Lezuo und Reiter in VGB Kraftwerkstechnik, Band 71, 1991, Heft 4, zu entnehmen.

In einer Hochtemperaturbrennstoffzellenanlage sind meist ein oder mehrere Stapel von Hochtemperaturbrennstoffzellen in einen Behälter eingebaut. Der Brennstoff und der Sauerstoffträger, meist Luft, werden über externe Zuleitungen in erhitzter und geringfügig verdichteter Form den Anoden bzw. den Kathoden der Hochtemperaturbrennstoffzellen zugeführt. Die Zufuhr des Brennstoffes ist dabei meist so ausgelegt, daß in den Hochtemperaturbrennstoffzellen etwa 80 % des Brennstoffes verbraucht werden und die restlichen 20 % des Brennstoffes zusammen mit dem bei der Reaktion aus Wasserstoff- und Sauerstoffionen gebildeten Produktwassers über Rohrleitungen abgeführt werden. Auf der Brennstoffseite wird das aus den Hochtemperaturbrennstoffzellen abgeführte Gasgemisch nicht rezirkuliert, sondern katalytisch nachverbrannt, wobei die frei werdende Energie zur Vorwärmung der Reaktanten und/oder zur Dampferzeugung genutzt wird.

Auf der Kathodenseite ist der Volumenstrom der Luft im Vergleich zu dem Volumenstrom des Brennstoffes um etwa einen Faktor 8 größer. Um den Wärmeinhalt des aus den Hochtemperaturbrennstoffzellen austretenden Abluftgemisches im Behälter nicht oder nur teilweise zu verlieren, ist es üblich, das kathodenseitige Abluftgemisch zumindest teilweise über Rohrleitungen aus dem Behälter abzuführen, erneut zu verdichten und wieder über Zuleitungen in den Behälter zurückzuführen. Hierbei treten jedoch eine Reihe von Nachteilen auf: Bei diesem bisher bekannten sogenannten "Mono-Block-Konzept" (vgl. Fuji Electric Review, Vol. 38, No. 2, Seite 58, und MBB in "Handelsblatt" vom 12.06.1990) stellen sich hohe Druckverluste auf der Verteiler- und Sammlerseite, das heißt, bei den luftseitigen Brennstoffzelleneinlässen bzw. -auslässen, ein, die ein Verdichter nur mit einem relativ hohen Leistungsbedarf kompensieren kann. Diese Druckverluste liegen gewöhnlich oberhalb etwa 50 mbar.

Im besonderen bei hohen elektrischen Gesamtleistungen der Hochtemperaturbrennstoffzellenanlage ist leicht erkennbar, daß auf der Kathodenseite erhebliche Probleme durch die Vielzahl von Zuleitungen und Ableitungen sowie durch den Gasverdichter bestehen. Dieser Gasverdichter muß ein heißes, sauerstoffhaltiges kathodenseitiges Abgas verdichten, was einen besonders hohen Wartungsaufwand, im besonderen an den beweglichen Teilen des Verdichters, verursacht. Zur Vermeidung dieses Nachteils ist es aus der DE-OS 40 21 097 bekannt, die kathodenseitige Abluft zunächst auf unterhalb etwa 650 °C abzukühlen, dann zu verdichten und anschließend wieder aufzuheizen. Nachteiligerweise macht diese Ausgestaltung die Verwendung zusätzlicher Wärmetauscher und den Einsatz zusätzlicher Wärmemengen erforderlich. Schwierig sind darüber hinaus die biegeweiche Verlegung und die Zusammenführung dieser Vielzahl von Einzelrohren auf der Zu- und Abführungsseite der Kathoden.

Der Erfindung liegt daher die Aufgabe zugrunde, eine Hochtemperaturbrennstoffzellenanlage anzugeben, bei der der Brennstoff- und der Sauerstoffträger mit einem besonders geringen Druckverlust in der Hochtemperaturbrennstoffzellenanlage geführt sind.

Diese Aufgabe wird erfindungsgemäß durch die Hochtemperaturbrennstoffzellenanlage gemäß Anspruch 1 gelöst.

Hierdurch wird erreicht, daß kathodenseitig der Sauerstoffträger, meist Luft, in einen einzigen Raum, den Luftzutrittsraum, eingeleitet und aus nur einem einzigen Raum, dem Luftaustrittsraum, abgeführt wird. Dies führt zu einem besonders geringen Druckverlust beim Verteilen und Sammeln des Sauerstoffträgers.

Hierdurch wird auch erreicht, daß die aus den Hochtemperaturbrennstoffzellen ausströmende Luft in den allen Luftauslässen gemeinsamen Luftaustrittsraum geführt wird und - ohne die bisher übliche Herausführung aus dem Behälter mit anschließender Verdichtung außerhalb des Behälters - zumindest teilweise wieder in den Luftzutrittsraum eingeleitet wird. Dabei wird die heiße, im Luftaustrittsraum befindliche Luft zumindest teilweise mittels der Strömungsbewegung der etwas kühleren in den Luftzutrittsraum einströmenden Luft rezirkuliert, wodurch die in die Lufteinlässe der Hochtemperaturbrennstoffzellen einströmende Luft bereits etwa eine zum Betrieb der Hochtemperaturbrennstoffzellen bevorzugte Temperatur hat.

Ein besonders vorteilhafter Aufbau der Hochtemperaturbrennstoffzellenanlage ergibt sich, wenn mehrere Hochtemperaturbrennstoffzellenstapel ringförmig unmittelbar aneinander angrenzend angeordnet sind. Ringförmig bedeutet dabei auch, daß mehrere Stapel in Form eines Vielecks angeordnet sind. Auf diese Weise sind in dem Behälter Luftzutritts- und Luftaustrittsraum besonders einfach zu trennen. Dabei kann der von den Hochtemperaturbrennstoffzellenstapeln eingeschlossene sogenannte Zentralraum der Luftaustrittsraum und entsprechend der außerhalb des Ringes der Hochtemperaturbrennstoffzellen-stapel liegende sogenannte Ringraum der Luftzutrittsraum sein und umgekehrt.

Da der Druckabfall bei der erfindungsgemäßen Ausgestaltung der Hochtemperaturbrennstoffzellenanlage auf der Luftseite nur relativ gering ist, ist es zweckmäßig, wenn Labyrinthschikanen als Mittel zur Abtrennung und/oder Dichtung eingesetzt sind. Auf diese Weise kann eine einfache Abdichtung und Trennung des Luftzutritts- vom Luftaustrittsraum auch zwischen den ringförmig angeordneten Hochtemperaturbrennstoffzellenstapeln erfolgen.

Als besonders einfaches und wartungsfreies Mittel zur Luftrezirkulation kann eine Luftstrahlpumpe (ejector) zur Rezirkulation der im Luftaustrittsraum befindlichen Luft verwendet sein.

Wenn der Luftstrahlpumpe im kalten Zustand verdichtete und daran anschließend vorgewärmte Luft zuführbar ist, ergibt sich ein besonders geringer Leistungsbedarf für den Luftverdichter, weil der Verdichter relativ kalte Luft mit relativ hoher Dichte verdichtet, bevor die Luft vorgewärmt wird, was bekanntlich zu einer Abnahme der Dichte der Luft führt.

Weitere vorteilhafte Ausgestaltungen der Erfindung sind den übrigen Unteransprüchen zu entnehmen.

Ausführungsbeispiele der Erfindung werden anhand von sechs Figuren näher erläutert. Dabei zeigen:
- Figur 1: einen Längsschnitt durch eine schematisch dargestellte Hochtemperaturbrennstoffzellenanlage;
- Figur 2: einen Schnitt entlang der Linie II-II in der Hochtemperaturbrennstoffzellenanlage gemäß Figur 1;
- Figur 3: in Vergrößerung den in Figur 2 eingestrichelten Ausschnitt III;
- Figur 4: die in eine Kraftwärmekopplungsanlage integrierte Hochtemperaturbrennstoffzellenanlage gemäß der Figur 1.
- Figur 5: in Vergrößerung den in Figur 2 eingestrichelten Ausschnitt III mit einem aus Teilstapeln aufgebauten Hochtemperaturbrennstoffzellen-Stapel; und
- Figur 6: eine schematische Darstellung des aus Teilstapeln aufgebauten Hochtemperaturbrennstoffzellen-Stapels der Figur 5.

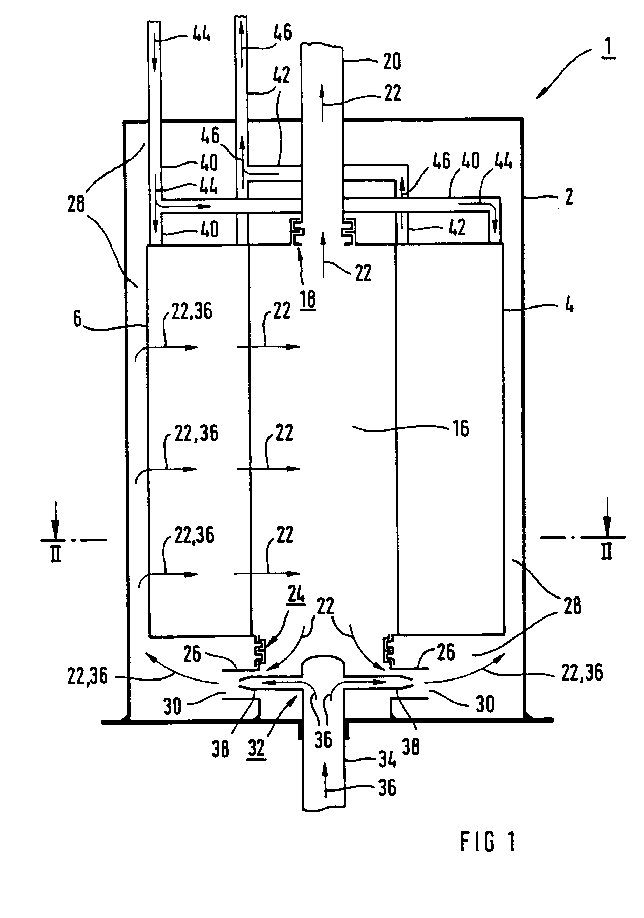

In den Figuren 1 bis 6 gleiche Teile haben gleiche Bezugszeichen.

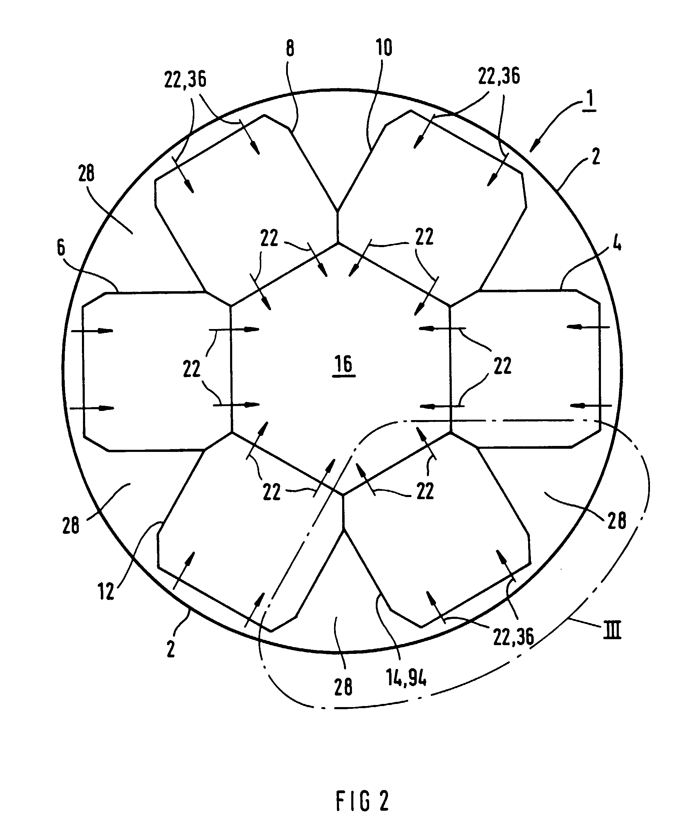

Figur 1 zeigt einen Längsschnitt durch eine Hochtemperaturbrennstoffzellenanlage 1. In dieser Anlage 1 sind in einen zylinderförmigen Reaktorbehälter 2 sechs Hochtemperaturbrennstoffzellenstapel 4 bis 14 ringförmig unmittelbar aneinander grenzend angeordnet (vgl. auch Figur 2). Jeder Hochtemperaturbrennstoffzellenstapel 4 bis 14 besteht aus 416 Ebenen mit jeweils 20 Hochtemperaturbrennstoffzellen in einer Ebene, so daß sich bei einer mittleren Leistung von etwa 2 Watt pro Brennstoffzelle und einer Anzahl von 49 920 Brennstoffzellen eine mittlere elektrische Leistung der Hochtemperaturbrennstoffzellenanlage 1 von etwa 100 kW ergibt. In diesem Ausführungsbeispiel wird ein Luftaustrittsraum, der sogenannte Zentralraum 16, durch die ringförmig angeordneten Brennstoffzellenstapel 4 bis 14 sowie durch ein mit Labyrinthschikanen 18 versehenes Abluftrohr 20 für kathodenseitige Abluft 22 und mit weiteren Labyrinthschikanen 24 und Strömungsführungsrohren 26 gegenüber einem Luftzutrittsraum, dem sogenannten Ringraum 28, abgegrenzt und abgedichtet. Hiervon sind Öffnungen 30 in den Strömungsführungsrohren 26 ausgenommen. Unterhalb der Hochtemperaturbrennstoffzellenstapel 4 bis 14 ist zentral im Zentralraum 16 eine Luftstrahlpumpe 32 angeordnet, der über eine Luftzuführungsleitung 34 vorgewärmte verdichtete Luft 36 zugeführt wird. Dabei ragen die Luftzuführungsstutzen 38 der Luftstrahlpumpe 32 mit ihren Düsen in die als Ansaugstutzen dienenden Strömungsführungsrohre 26.

Im oberen Teil der Hochtemperaturbrennstoffzellenstapel 4 bis 14 sind an jeden Stapel 4 bis 14 jeweils eine Brennstoffzuführungsleitung 40 und jeweils eine Abgasleitung 42 angeschlossen. Über die Brennstoffzuführungsleitung 40 wird den Stapeln 4 bis 14 ein Gasgemisch 44, bestehend aus zuvor verdichtetem und erhitztem, durch die Reformierung von Erdgas gewonnenem Wasserstoffgas, noch unreformiertem Erdgas und Wasser, zugeführt. Über die Abgasleitung 42 wird ein aus den Stapeln 4 bis 14 ausströmendes Abgas 46, bestehend aus nicht verbrauchtem Wasserstoffgas und dem bei der Verbrennungsreaktion gebildeten Produktwasser, abgeführt.

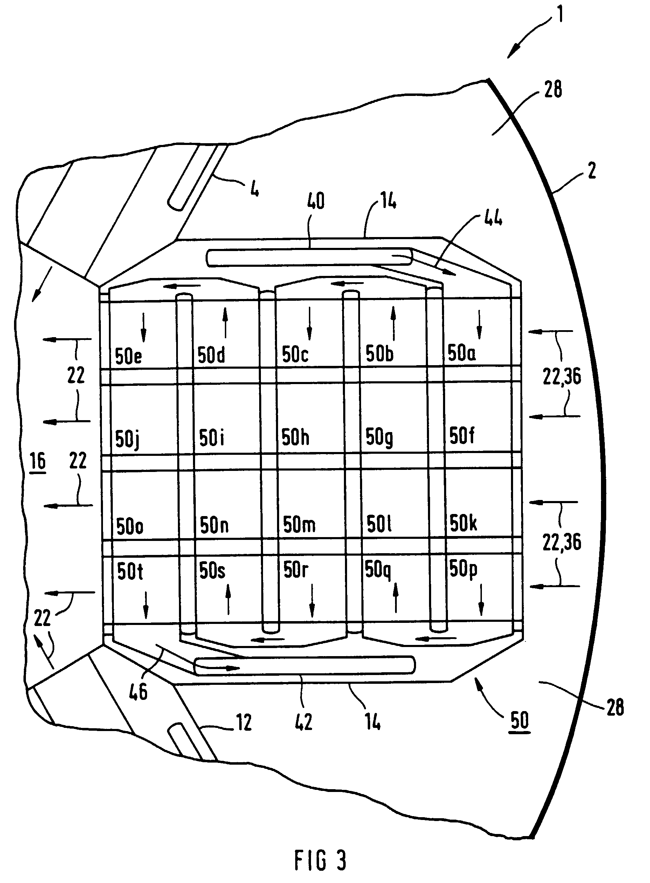

Beim Betrieb der Hochtemperaturbrennstoffzellenanlage 1 mit einer im Ausführungsbeispiel gewählten Leistung von etwa 100 kW wird über die Luftzuführungsleitung 34 etwa auf 700° C aufgeheizte Luft 36 mit einem Massenstrom von etwa 60 g pro Sekunde herangeführt, was einem Volumenstrom von etwa 210 Litern pro Sekunde entspricht. Mittels der Luftstrahlpumpe 32, wird über die Luftzuführungsstutzen 38 die Luft 36 in den Ringraum 28 eingedüst. Dabei reißt die in den Ringraum 28 eingedüste Luft 36 einen Teil der im Zentralraum 16 befindlichen und etwa 1000° C warmen Abluft 22 mit sich, so daß die Lufttemperatur im Ringraum 28 etwa 900 ° C und der Massenstrom etwa 180 g pro Sekunde beträgt, was einem Volumenstrom von etwa 650 Litern pro Sekunde entspricht. Durch entsprechende Strömungsführung in den einzelnen Hochtemperaturbrennstoffzellen, was nachfolgend noch in Figur 3 erläutert wird, wird die Druckdifferenz zwischen Ringraum 28 und Zentralraum 16 auf nur etwa 5 mbar begrenzt. Dieser geringe Druckverlust macht die Verwendung von einfachen Labyrinthschikanen 18, 24 zur Abdichtung des Zentralraums 16 gegen den Ringraum 28 möglich. Da die in die Luftstrahlpumpe 32 eingebrachte Luft 36 bereits im kalten Zustand verdichtet worden ist, ist der Leistungsbedarf des dazu benötigten Verdichters so gering, daß ein Gesamtleckquerschnitt von im Ausführungsbeispiel etwa 60 cm² unbedenklich ist, zumal dies nur etwa 2 % des Gesamtquerschnitts der Luftführungskanäle in den nicht weiter dargestellten bipolaren Platten der in Figur 1 nicht weiter dargestellten Hochtemperaturbrennstoffzellen ausmacht.

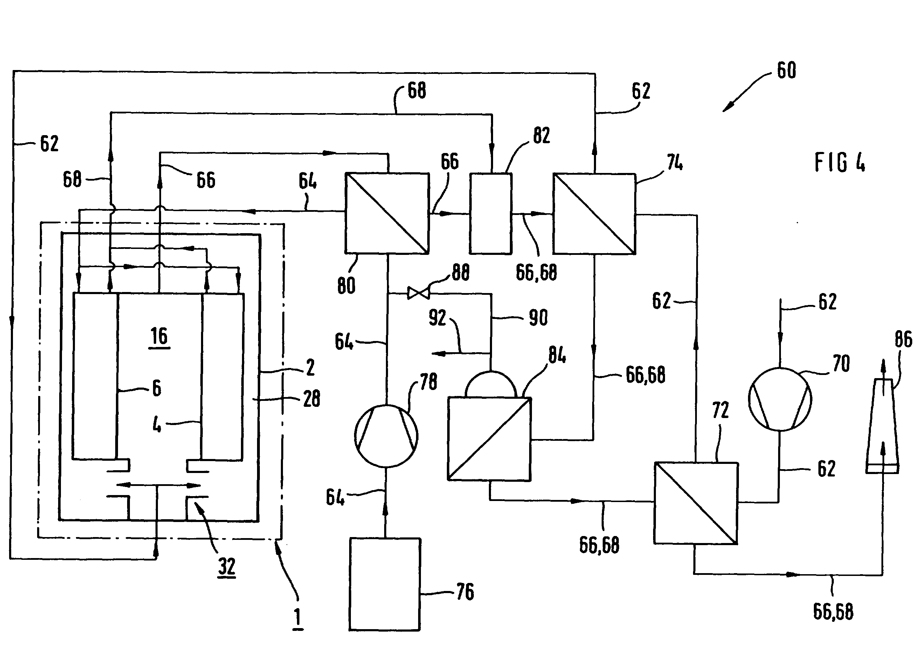

Der in die Brennstoffzellen einströmende molekulare Sauerstoff des etwa 900° C warmen Luft- Abluftgemisches 22, 36 wird an den Kathoden der Hochtemperaturbrennstoffzellen in Sauerstoffionen umgewandelt. Die hierzu erforderlichen Elektronen werden an den Anoden der Hochtemperaturbrennstoffzellen durch die Oxidation des im Gasgemisch 44 enthaltenen Wasserstoffgases, das im Mittel einen Gesamtvolumenstrom von 80 Litern pro Sekunde hat, frei. Die an den Anoden frei gewordenen Elektronen fließen über einen hier nicht weiter dargestellten externen Stromkreis an die Kathoden, wobei die Sauerstoffionen durch einen zwischen Anode und Kathode angeordneten Sauerstoffionen leitenden Elektrolyten fließen und anodenseitig mit den Wasserstoffionen Wasser bilden. Dieses Produktwasser wird zusammen mit nicht verbrauchtem Wasserstoffgas als Anodenabgas 46 über die Abgasleitung 42 aus dem Behälter 2 abgeführt. Da das Anodenabgas 46 in Rohre mit relativ kleinem Querschnitt eingeleitet wird, beträgt der Druckabfall auf der Anodenseite etwa 50 mbar. Dieser Druckabfall ist jedoch unerheblich, da das Gasgemisch 44 nach etwa 80 %iger Brenngasausnutzung nicht wieder in die Brennstoffzellen rezirkuliert wird, sondern nachfolgend verbrannt wird, was zu Figur 4 noch nachstehend erläutert wird.

Der in den Brennstoffzellen nicht verbrauchte Luftsauerstoff strömt zusammen mit den inerten Bestandteilen der Luft 36 als Abluft 22 in den Zentralraum 16. Wie bereits beschrieben, wird ein Teil dieser Abluft 22, nämlich etwa 120 g pro Sekunde, mittels der Luftstrahlpumpe 32 in den Ringraum 28 rezirkuliert. Die übrige Abluft 22 wird mit einem Massenstrom von 60 g pro Sekunde über das Abluftrohr 20 abgeführt, nachfolgend mit dem Anodenabgas 46 zusammengeführt und verbrannt.

Der in Figur 2 dargestellte Schnitt entlang der Linie II-II in Figur 1 verdeutlicht noch einmal, auf welcher Weise die Brennstoffzellenstapel 4 bis 14 Bestandteil einer Abtrennung sind, die den Zentralraum 16 von dem Ringraum 28 trennt. Dabei ist die Anzahl der unmittelbar gasdicht aneinander grenzenden Brennstoffzellenstapel 4 bis 14 abhängig von der gewünschten Leistung der Hochtemperaturbrennstoffzellen-Anlage 1 in weiten Grenzen frei wählbar.

In Figur 3 ist der in Figur 2 eingestrichelte Ausschnitt III vergrößert dargestellt. Er zeigt exemplarisch in schematischer Darstellung den Aufbau einer Ebene 50, bestehend aus 20 Hochtemperaturbrennstoffzellen 50a bis 50t mit einer Abmessung von jeweils etwa 5x5 mm. Die Hochtemperaturbrennstoffzellen 50a bis 50t sind nach Art einer Matrix in vier Zeilen und fünf Spalten angeordnet. Kathodenseitig, also auf der Luftseite, werden in der Ebene 50 vier parallele Kanäle mit jeweils fünf in Reihe geschaltete Brennstoffzellen durchströmt. Dies sind im einzelnen die Kanäle für die Hochtemperaturbrennstoffzellen 50a bis 50e, 50f bis 50j, 50k bis 50o und 50p bis 50t. Anodenseitig, d. h. auf der Wasserstoffgasseite, wird das Gasgemisch 44 im Kreuzgleichstrom zu dem Abluft-Luftgemisch 22, 36 geführt, und zwar der Reihe nach durch die Hochtemperaturbrennstoffzellen 50a, f, k, p, q, l, g, b, c, h, m, r, s, n, i, d, e, j, o, t. Ebenso wäre es jedoch auch denkbar, die Reaktanten im Kreuzgegenstrom zu führen, was bedeuten würde, daß beispielsweise das Gasgemisch 44 genau entgegengesetzt zu der Darstellung in Figur 3 strömen würde.

In vorteilhafter Weise kann die Zusammensetzung der Anoden und Kathoden, bzw. deren Belegung mit Katalysatoren, von strömungsmäßig in Serie geschalteten Hochtemperaturbrennstoffzellen unterschiedlich sein, damit eine interne Reformierung des im Gasgemisch 44 vorhandenen Erdgases nicht zu plötzlich und mit zu starker örtlicher Unterkühlung abläuft, wodurch in den einzelnen Ebenen Wärmespannungen vermieden werden können. Dies kann im einzelnen bedeuten, daß beispielsweise die Konzentration an Katalysatoren auf der Oberfläche der Anode in Strömungsrichtung des Gasgemisches 44 zunimmt. Anhand von Figur 3 ist auch nochmals explizit gezeigt, daß die hier nicht weiter dargestellten Luftkanäle der bipolaren Platten im Ringraum 28 beginnen und im Zentralraum 16 einer Zylinderanordnung (vergleiche zylinderförmiger Reaktorbehälter 2) enden. Auf diese Weise wird der Druckverlust beim Verteilen des Abluftluftgemisches 22, 36 und beim Sammeln der Abluft 22 jeweils besonders klein. Hierdurch wird der Leistungsbedarf für den Luftverdichter besonders klein, was im Gegensatz zu den bisher üblichen Verdichterleistungen von Hochtemperaturbrennstoffzellenanlagen steht, bei denen die Abluft 22 und die Luft 36 den Hochtemperaturbrennstoffzellenstapeln über eine Vielzahl von Rohren ab- bwz. zugeführt wird.

In Abbildung 4 ist schematisch dargestellt, in welcher Weise die Hochtemperaturbrennstoffzellenanlage 1 gemäß der Figuren 1 bis 3 in eine Kraftwärmekopplungsanlage 60 integriert ist.

Bei der Beschreibung der Figur 4 werden im wesentlichen ein Luftzuführungsstrang 62, ein Brennstoffzuführungsstrang 64, ein Abluftstrang 66 und ein Abgasstrang 68 erläutert. Die in der Figur 4 in den Strömungssträngen 62 bis 68 eingezeichneten Pfeile geben die Strömungsrichtung des jeweiligen Strömungsmediums an.

In den Luftzuführungsstrang 62 sind der Reihe nach ein Saugzuggebläse 70, die Sekundärseite eines ersten Luftvorwärmers 72, die Sekundärseite eines zweiten Luftvorwärmers 74 und die Luftstrahlpumpe 32 eingebaut. In den Brennstoffzuführungsstrang 64 sind ausgehend von einem Erdgasspeicher 76 ein Saugzuggebläse 78 und die Sekundärseite eines Vorreformers 80 eingebaut. Der Abluftstrang 66 beginnt am Zentralraum 16 und führt über die Primärseite des Vorreformers 80 zu einem Brenner 82. Der Abgasstrang 68 mündet ausgehend von den Hochtemperaturbrennstoffzellenstapeln 4, 6 direkt in den Brenner 82. Ab dem Brenner 82 werden der Abgasstrang 68 und der Abluftstrang 66 gemeinsam der Reihe nach durch die Primärseite des zweiten Luftvorwärmers 74, die Primärseite eines Dampferzeugers 84, die Primärseite des ersten Lufvorwärmers 72 und schließlich in einen Kamin 86 geführt. Von der Sekundärseite des Dampferzeugers 84 ausgehend mündet eine Dampf zuführungsleitung 90 über ein Ventil 88 in den Brennstoffzuführungsstrang 64, und zwar in Strömungsrichtung des Erdgases zwischen dem Saugzuggebläse 78 und der Sekundärseite des Vorreformers 80. Außerdem ist an der Dampfzuführungsleitung 90 eine Dampfauskopplung 92 angeschlossen, die zu einer hier nicht weiter dargestellten Turbine zur Stromerzeugung führt.

Beim Betrieb der Kraftwärmekopplungsanlage 60 mit einer Hochtemperaturbrennstoffzellenanlage 1 mit einer elektrischen Leistung von etwa 100 kW wird der Luftstrahlpumpe 32 etwa 700° heiße Luft mit einem Massenstrom von etwa 60 g pro Sekunde nahezu drucklos zugeführt. Hierbei wurde die Luft über den Luftzuführungsstrang mittels des Saugzuggebläses befördert und auf den Sekundärseiten des ersten und zweiten Luftwärmers 72, 74 auf die genannte Temperatur erwärmt. Außerdem wird der Hochtemperaturbrennstoffzellenanlage 1 mittels des Saugzuggebläses 78 aus dem Erdgasspeicher 76 entnommenes Erdgas mit einer Temperatur von etwa 1000° zugeführt. Die Temperatur des Erdgases wird auf der Sekundärseite des Vorreformers 80 eingestellt. Hier wird auch das Erdgas zu etwa der Hälfte vorreformiert. Durch die Einbringung von Dampf über die Dampfzuführungsleitung 90 und das Ventil 88 in das Erdgas wird infolge der Reformierung des Erdgases in den Vorreformer 80 und aufgrund der hohen Temperaturen jede Rußbildung vermieden.

In der Hochtemperaturbrennstoffzellenanlage 1 läuft dann unter Verbrauch von Luftsauerstoff und Wasserstoff die bereits beschriebene Verbrennungs-Reaktion ab. Dabei beträgt der luftseitige Massenstrom in dem Ringraum 28 etwa 180 g pro Sekunde. Mittels der Luftstrahlpumpe 32 werden etwa 120 g pro Sekunde der im Zentralraum 16 befindlichen Luft 16 in den Ringraum 28 und damit in die Hochtemperaturbrennstoffzellen-stapel 4, 6 rezirkuliert. Das Erdgas wird zu etwa 80 % in der Hochtemperaturbrennstoffzellenanlage 1 verbraucht und über den Abgasstrang 68 in den Brenner 82 eingeleitet. Über den Abluftstrang 66 wird die noch im Zentralraum 16 befindliche Luft über die Primärseite des Vorreformers 80, wobei der Wärmeinhalt der Abluft in vorteilhafter Weise zur Vorreformierung des Erdgases benutzt wird, ebenfalls in den Brenner 82 eingeleitet.

In dem Brenner 82 werden die noch im Gasgemisch 44 enthaltenen Wasserstoffmoleküle und Kohlenwasserstoffe zusammen mit dem noch in der Abluft 22 enthaltenen Sauerstoff verbrannt. Der Wärmeinhalt des Brennerabgases im Abluft-Abgasstrang 66, 68 wird zunächst teilweise in dem zweiten Luftvorwärmer 74 auf die zugeführte Luft zur Vorwärmung übertragen, dann in dem Dampferzeuger 84 zur Dampferzeugung genutzt und anschließend in dem ersten Luftvorwärmer zur anfänglichen Temperaturerhöhung der der Hochtemperaturbrennstoffzellenanlage 1 zugeführten Luft genutzt. Das weitgehend abgekühlte Brennerabgas wird anschließend über den Kamin 86 ins Freie geführt.

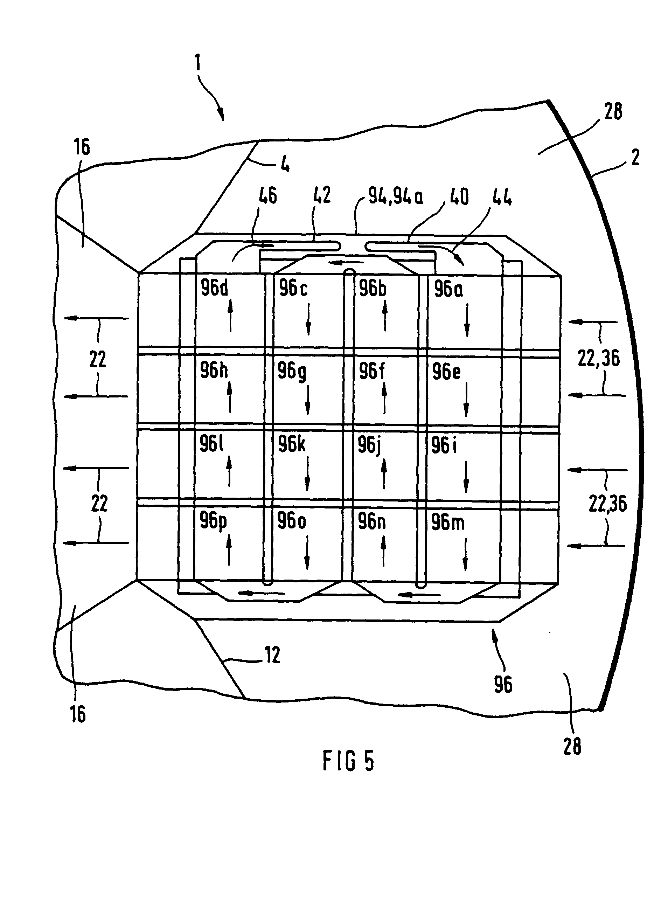

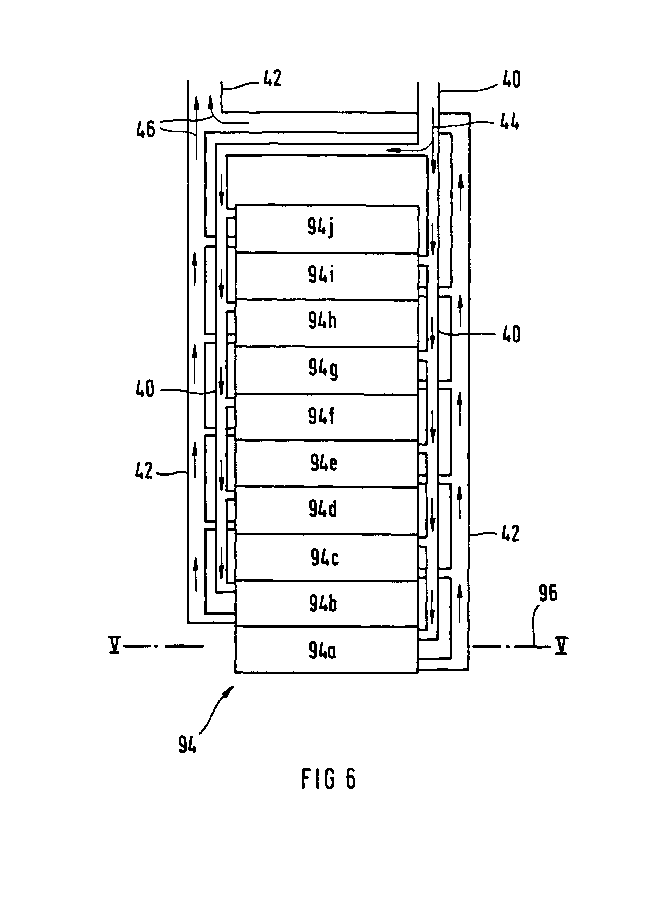

In Figur 5 ist der in Figur 3 dargestellte Ausschnitt nochmals dargestellt. Im Gegensatz zu Figur 3 ist jedoch der Brennstoffzellenstapel 14 gegen einen Brennstoffzellenstapel 94 ausgetauscht, der aus zehn übereinander angeordneten Teilstapeln 94a bis 94j besteht (vergleiche Figur 6). In einer Ebene 96 des Hochtemperaturbrennstoffzellenstapels 94 sind nun 16 Hochtemperaturbrennstoffzellen 96a bis 96p angeordnet. Diese Hochtemperaturbrennstoffzellen 96 bis 96p werden ebenso wie die Brennstoffzellen 50 bis 50t der Figur 3 im Kreuz-Gleichstrom von dem Abluft/Luftgemisch 22, 36 und dem Gasgemisch 44, das im wesentlichen Wasserstoff enthält, durchströmt. Kathodenseitig, also auf der Luftseite, werden in der Ebene 96 vier parallele Kanäle mit jeweils vier in Reihe geschalteten Hochtemperaturbrennstoffzellen durchströmt. Dies sind im einzelnen die Kanäle für die Hochtemperaturbrennstoffzellen 96a bis 96d, 96e bis 96h, 96i bis 961 und 96m bis 96p. Anodenseitig, d. h. auf der Wasserstoffgasseite, wird das Gasgemisch 44 im Kreuz-Gleichstrom zu dem Abluft / Luftgemisch 22, 36 geführt und zwar der Reihe nach durch die Hochtemperaturbrennstoffzellen 96a, e, i, m, n, j, f, b, c, g, k, o, p, l, h, d.

Dieser Aufbau der Ebene 96 erlaubt es, die Brennstoffzuführungsleitung 40 und die Abgasleitung 42 auf derselben Seite des Teilstapels 94a zu führen. Wie Figur 6 verdeutlicht, sind die Teilstapel 94a bis 94j abwechselnd auf gegenüberliegenden Seiten an die Brennstoffzuführungsleitung 40 und die Abgasleitung 42 angeschlossen. Auf diese Weise wird es besonders einfach, einen defekten Teilstapel aus dem Hochtemperaturbrennstoffzellenstapel 94 zu entfernen.

Desweiteren ist die Herstellung eines kleineren Teilstapels 94a bis 94j erheblich einfacher als die Herstellung eines einzigen großen Stapels, weil im besonderen bei dem Verlöten der einzelnen Brennstoffzellen zu einem festen Stapel nicht unerhebliche Schwerkrafteffekte durch das Eigengewicht der übereinander aufgestapelten Hochtemperaturbrennstoffzellen wirken. Der Betrieb einer Hochtemperaturbrennstoffzellenanlage 1 mit den in Figuren 5 und 6 gezeigten Teilstapeln ist auch sicherer gegenüber den aus einem einzigen Block bestehenden Brennstoffzellenstapel 4 bis 14, weil im Fall von Undichtigkeiten lokale Abbrände von Sauerstoff und Wasserstoff auf den relativ kleinen Bereich eines Teilstapels 94a bis 94j begrenzt bleiben.

Die in den Ausführungsbeispielen gezeigte Reaktorvariante mit einer Leistung von 100 kW läßt sich ohne weiteres selbst bei drucklosem, also atmosphärischem, Betrieb auf 400 bis 600 kW steigern. Hierzu kann beispielsweise die Zahl der ringförmig angeordneten Hochtemperaturbrennstoffzellenstapel 4 bis 14, 94 von im Ausführungsbeispiel sechs Stapeln auf zwölf Stapel verdoppelt werden. Desweiteren können mehrere Reaktorbehälter 2 übereinander angeordnet sein.

## Patentansprüche

1. Hochtemperaturbrennstoffzellenanlage (1) mit einem Behälter (2) und mit mindestens einem in dem Behälter (2) angeordneten Hochtemperaturbrennstoffzellenstapel (4-14, 94), bei der der Hochtemperaturbrennstoffzellenstapel (4-14, 94) Abtrennung oder Bestandteil einer Abtrennung ist, die im Behälter (2) einen Luftzutrittsraum (28), in den Lufteinlässe der Hochtemperaturbrennstoffzellen münden, und einen Luftaustrittsraum (16), in den Luftauslässe der Hochtemperaturbrennstoffzellen münden, voneinander trennt, wobei in der Abtrennung mindestens eine Stelle vorgesehen ist, an der die im Luftaustrittsraum (16) befindliche Luft (22) mittels der in den Luftzutrittsraum (28) einströmenden Luft (36) zumindest teilweise in den Luftzutrittsraum (28) rezirkulierbar ist.

2. Hochtemperaturbrennstoffzellenanlage nach Amspruch 1, **dadurch gekennzeichnet**, daß mehrere Hochtemperaturbrennstoffzellenstapel (4 - 14, 94) ringförmig unmittelbar aneinander angrenzend angeordnet sind.

3. Hochtemperaturbrennstoffzellenanlage nach einem der ansprüche 1 oder 2, **dadurch gekennzeichnet**, daß Labyrinthschikanen (18, 24) als Mittel zur Abtrennung und/ oder Dichtung eingesetzt sind.

4. Hochtemperaturbrennstoffzellenanlage nach einem der Ansprüche 2 bis 3, **gekennzeichnet durch** eine Luftstrahlpumpe (32) zur Rezirkulation der im Luftaustrittsraum (16) befindlichen Luft (22).

5. Hochtemperaturbrennstoffzellenanlage nach Anspruch 4, **dadurch gekennzeichnet**, daß die Luftstrahlpumpe (32) mittels im kalten Zustand verdichteter und daran anschließend vorgewärmter Luft (36) betreibbar ist.

6. Hochtemperaturbrennstoffzellenanlage nach Anspruch 4 oder 5, **dadurch gekennzeichnet**, daß die Luftstrahlpumpe (32) zentral im Luftaustrittsraum (16) in Richtung des Luftzutrittsraumes (28) blasend angeordnet ist.

7. Hochtemperaturbrennstoffzellenanlage nach einem der Ansprüche 1 bis 6, **dadurch gekennzeichnet**, daß innerhalb eines Hochtemperaturbrennstoffzellen-stapels (14, 94) mehrere Hochtemperaturbrennstoffzellen (50a - 50t, 96a - 95p) in einer Ebene senkrecht zur Stapelrichtung angeordnet und im Kreuzgleich- oder Kreuzgegenstrom von einem Brenngas (44) und Luft (22, 36) durchströmt sind.

8. Hochtemperaturbrennstoffzellenanlage nach einem der Ansprüche 1 bis 8, **dadurch gekennzeichnet**, daß ein Hochtemperaturbrennstoffzellenstapel (94) in mehrere, übereinander angeordnete Teilstapel (94a bis 94j) unterteilt ist.

9. Hochtemperaturbrennstoffzellenanlage nach einem der Ansprüche 1 bis 8, **dadurch gekennzeichnet**, daß die Zusammensetzung von Kathode und Anode der Hochtemperaturbrennstoffzellen (50a - 50t, 96a - 96p) oder der Belegung mit katalytischem Material bei strömungsmäßig in Serie geschalteten Hochtemperaturbrennstoffzellen unterschiedlich ist.

10. Hochtemperaturbrennstoffzellenanlage nach einem der Ansprüche 1 bis 9, **dadurch gekennzeichnet**, daß mittels des Wärmeinhaltes der nicht aus dem Luftaustrittsraum (16) in den Lufteintrittsraum (28) rezirkulierten Luft (22) bedarfsweise das Brenngas (44) vor- oder teilreformierbar ist.

## Claims

1. High-temperature fuel cell system (1) having a container (2) and at least one high-temperature fuel cell stack (4 - 14, 94) arranged in the container (2), wherein the high-temperature fuel cell stack (4 - 14, 94) is a partition or forms part of a partition which separates an air entry space (28), into which the air inlets of the high-temperature fuel cells open, and an air exit space (16), into which the air outlets of the high-temperature fuel cells open, from one another in the container (2), at least one location being provided in the partition, at which the air (22) situated in the air exit space (16) can be recirculated at least partially into the air entry space (28) by means of the air (36) flowing into the air entry space (28).

2. High-temperature fuel cell system according to Claim 1, characterized in that a plurality of high-temperature fuel cell stacks (4 - 14, 94) are arranged directly next to one another in a ring.

3. High-temperature fuel cell system according to one of Claims 1 or 2, characterized in that labyrinth chicanes (18, 24) are used as partitioning and/or sealing means.

4. High-temperature fuel cell system according to one of Claims 2 to 3, characterized by an air jet pump (32) for recirculating the air (22) situated in the air exit space (16).

5. High-temperature fuel cell system according to Claim 4, characterized in that the air jet pump (32) can be operated by means of air (36) compressed in the cold state and subsequently preheated.

6. High-temperature fuel cell system according to Claim 4 or 5, characterized in that the air jet pump (32) is arranged centrally in the air exit space (16), blowing in the direction of the air entry space (28).

7. High-temperature fuel cell system according to one of Claims 1 to 6, characterized in that, within a high-temperature fuel cell stack (14, 94) a plurality of high-temperature fuel cells (50a - 50t, 96a - 95p) are arranged in a plane perpendicularly to the stacking direction and a fuel gas (44) and air (22, 36) flow through them in crossed cocurrent or countercurrent flow.

8. High-temperature fuel cell system according to one of Claims 1 to 8, characterized in that a high-temperature fuel cell stack (94) is subdivided into a plurality of partial stacks (94a to 94j) arranged one on top of the other.

9. High-temperature fuel cell system according to one of Claims 1 to 8, characterized in that the cathode and anode composition of the high-temperature fuel cells (50a - 50t, 96a - 96p) or the way in which they are coated with catalytic material is different in the case of high-temperature fuel cells connected in series in the flow direction.

10. High-temperature fuel cell system according to one of Claims 1 to 9, characterized in that, by means of the heat content of the air (22) not recirculated out of the air exit space (16) into the air entry space (28), the fuel gas (44) can be pre-reformed or partially reformed according to requirements.

## Revendications

1. Installation (1) de pile à combustible à haute température, comprenant une enveloppe (2) et au moins un empilement (4 à 14, 94) de piles à combustible à haute température disposées dans l'enveloppe (2), dans laquelle l'empilement (4 à 14, 94) de piles à combustible à haute température est une séparation ou fait partie d'une séparation qui sépare entre elles dans l'enveloppe (2) une chambre (28) d'arrivée d'air, dans laquelle débouchent des entrées d'air des piles à combustible à haute température, et une chambre (16) de sortie d'air, dans laquelle débouchent des sorties d'air des piles à combustible à haute température, au moins un point étant prévu dans la séparation où l'air (22) se trouvant dans la chambre (16) de sortie d'air peut être, au moyen de l'air (36) affluant dans la chambre (28) d'arrivée d'air, renvoyé au moins partiellement à la chambre (28) d'arrivée d'air.

2. Installation à pile à combustible à haute température suivant la revendication 1, caractérisée en ce que plusieurs empilements (4 à 14, 94) de piles à combustible à haute température sont disposés annulairement en étant directement adjacents.

3. Installation à pile à combustible à haute température suivant la revendication 1 ou 2, caractérisé en ce que des chicanes (18, 24) en labyrinthe sont utilisées comme moyen de séparation et/ou d'obtention de l'étanchéité.

4. Installation à pile à combustible à haute température suivant l'une des revendications 2 à 3, caractérisée par une trompe à air (32) pour renvoyer l'air (22) se trouvant dans la chambre (16) de sortie de l'air.

5. Installation à pile à combustible à haute température suivant la revendication 4, caractérisée en ce que la trompe à air (32) peut fonctionner au moyen d'air (36) condensé à l'état froid et ensuite préchauffé.

6. Installation à pile à combustible à haute température suivant la revendication 4 ou 5, caractérisée en ce que la trompe à air (32) est disposée de manière à souffler au centre de la chambre (16) de sortie d'air dans la direction de la chambre (28) d'arrivée d'air.

7. Installation à pile à combustible à haute température suivant l'une des revendications 1 à 6, caractérisée en ce qu'au sein d'un empilement (14, 94) de piles à combustible à haute température, plusieurs piles à combustible (50a à 50t, 96a à 95p) à haute température sont disposées dans un plan perpendiculairement à la direction d'empilement et sont parcourues en courant croisé de même sens ou à contre-courant croisé par du gaz combustible (44) et de l'air (22, 36).

8. Installation à pile à combustible à haute température suivant l'une des revendications 1 à 7, caractérisée en ce qu'un empilement (94) de piles à combustible à haute température est subdivisé en plusieurs empilements partiels (94a à 94j) superposés.

9. Installation à pile à combustible à haute température suivant l'une des revendications 1 à 8, caractérisée en ce que la composition des cathodes et des anodes des piles à combustible (50a à 50t, 96a à 96p) à haute température ou le matériau catalytique qui s'y trouve est différent pour des piles à combustible à haute température montées en série du point de vue du passage du courant.

10. Installation à pile à combustible à haute température suivant l'une des revendications 1 à 9, caractérisée en ce qu'au moyen de l'enthalpie de l'air (22) qui n'est pas renvoyé de la chambre (16) de sortie d'air à la chambre (28) d'entrée d'air, le gaz combustible (44) peut subir, en cas de besoin, un pré-reformage ou un reformage partiel.
